# EUROPÄISCHE PATENTANMELDUNG

(11) **EP 1 286 080 A2**
(43) Veröffentlichungstag der Anmeldung: **26.02.2003**
(21) Anmeldenummer: 02014751.8
(22) Anmeldetag: 04.07.2002
(51) Int. Cl.: F16H 3/08, F16H 57/02

(54) **Getriebeschaltvorrichtung**

(30) Priorität: 10.08.2001 DE 10139512
(71) Anmelder: Bayerische Motoren Werke Aktiengesellschaft, 80809 München (DE)
(72) Erfinder: Körber, Martin, 85375 Neufahrn (DE)

(57) **Zusammenfassung**

Die Getriebeschaltvorrichtung weist zwei nebeneinanderliegende Schaltgassen auf, deren Abstand so gewählt ist, dass sich die in Schaltgassenlängsrichtung projizierten Außenumfänge der Schiebemuffen (1,2) schneiden bzw. überlappen. Hierzu ist im Umfangsbereich der einen Schiebemuffe (2) eine umlaufende "Ausnehmung" (6) vorgesehen, in die zumindest ein Teil (9) des Umfangsbereichs der anderen Schiebemuffe (1) eingreifen kann. Die Ausnehmung (6) kann beispielsweise eine umlaufende nutartige Vertiefung (6) sein. Der in die Ausnehmung eingreifende Teil der anderen Schiebemuffe kann eine komplementär gestaltete ringartige Erhebung (9) sein. Die Breite der nutartigen Vertiefung (6) ist jedoch größer als die Breite der ringartigen Erhebung (9), so dass eine axiale Relativverschiebung der beiden Schiebemuffen (1,2) möglich ist.

## Beschreibung

Die vorliegende Erfindung betrifft eine Getriebeschaltvorrichtung gemäß dem Oberbegriff des Patentanspruches 1.

Aus der DE 39 39 274 C1 ist ein Getriebe bekannt, bei dem ein erstes und ein zweites schaltbares Zahnrad drehbar auf einer Eingangswelle gelagert sind. Zwischen den beiden Zahnrädern ist eine Festmuffe angeordnet, die drehfest mit der Eingangswelle verbunden ist. Auf der Festmuffe ist axial verschieblich eine Schiebemuffe angeordnet, die drei Schaltstellungen einnehmen kann, nämlich eine Mittel- bzw. Neutralstellung sowie eine erste bzw. zweite Schaltstellung, in der das erste bzw. zweite Zahnrad über die Schiebemuffe und die Festmuffe drehfest mit der Welle verbunden ist. Zur Betätigung der Schiebemuffe ist an ihrem Außenumfang eine umlaufende Nut vorgesehen, in die eine mit einer Schaltstange verbundene Schaltgabel eingreift, welche vom Fahrer über einen Schalthebel bedienbar ist.

In Wechselgetrieben ohne Planetenradsätzen werden, wie es beispielsweise in der oben genannten DE 39 39 274 C1 erläutert ist, ein Gang geschaltet, indem eine formschlüssige Verbindung zwischen einem Zahnrad und der zugeordneten Welle hergestellt wird. Ist die "Verbindung" zwischen dem Zahnrad und der Welle geschlossen, so kann über diesen "Pfad" ein Drehmoment übertragen werden. Ein derartiges "Verbindungselement" weist ein Innenteil bzw. eine Festmuffe auf, mit einer Außenverzahnung mit in Achsrichtung angeordneten Zähnen, sowie eine axial verschiebliche Schiebemuffe mit einer Innenverzahnung. Die Festmuffe und die Schiebemuffe sind stets in Eingriff. Durch axiales Verschieben der Schiebemuffe kann ein Zahnrad zugeschaltet werden, das heißt, in Drehrichtung formschlüssig über die Festmuffe mit der Welle verbunden werden.

Bei der Auslenkung aus der Neutralstellung wird die Schiebemuffe so weit in axialer Richtung bewegt, dass sie einerseits immer noch mit der Festmuffe in Eingriff steht, andererseits aber auch mit ihrer Innenverzahnung in die zugeordnete Verzahnung des "anzukoppelnden" Bauteils eintaucht.

Bei Kfz-Getrieben sind üblicherweise mehrere "Schaltgassen" nebeneinander angeordnet, denen jeweils eine Schiebemuffe zugeordnet ist. Der maximal mögliche Durchmesser dieser Schiebemuffen ist bei herkömmlichen Getrieben durch den maximalen Durchmesser von Radsatzbauteilen benachbarter Wellen bzw. Schaltgassen und durch den Abstand der Schaltgassen begrenzt.

Aufgabe der Erfindung ist es, eine Getriebeschaltvorrichtung mit mindestens zwei nebeneinanderliegenden Schaltgassen zu schaffen, die eine noch kompaktere Bauweise aufweist.

Das Grundprinzip der Erfindung besteht darin, den Abstand der nebeneinanderliegenden Schaltgassen so zu wählen, dass sich die in Schaltgassenlängsrichtung projizierten Außenumfänge der Schiebemuffen schneiden bzw. überlappen. Hierzu ist im Umfangsbereich der einen Schiebemuffe eine umlaufende "Ausnehmung" vorgesehen, in die zumindest ein Teil des Umfangsbereichs der anderen Schiebemuffe eingreifen kann. Die Ausnehmung kann beispielsweise eine umlaufende nutartige Vertiefung sein. Der in die Ausnehmung eingreifende Teil der anderen Schiebemuffe kann eine komplementär gestaltete ringartige Erhebung sein. Die Breite der nutartigen Vertiefung ist jedoch um ein mehrfaches größer als die Breite der ringartigen Erhebung, so dass eine axiale Relativverschiebung der beiden Schiebemuffen, das heißt ein Schalten der einen Schaltgasse unabhängig von der anderen Schaltgasse möglich ist.

Bei einer Variante der Erfindung weisen beide Schiebemuffen an ihrem Außenumfangsbereich jeweils eine umlaufende ringartige Erhebung auf, die für die jeweils andere Schiebemuffe einen axialen "Endanschlag" bildet. Das heißt, der axiale Verschiebeweg einer Schiebemuffe ist in einer Achsrichtung durch die andere Schiebemuffe begrenzt, in der anderen Achsrichtung jedoch nicht. Die ringartigen Erhebungen der beiden Schiebemuffen sind vorzugsweise außermittig angeordnet. Somit ist die ringartige Erhebung der einen Schiebemuffe nahe dem vorderen bzw. linken axialen Ende dieser Schiebemuffe angeordnet und die ringartige Erhebung der anderen Schiebemuffe ist nahe dem hinteren bzw. rechten axialen Ende der anderen Schiebemuffe angeordnet.

Aufgrund der ineinander "eingreifenden" Anordnung bzw. "Überlappung" der beiden nebeneinanderliegenden Schaltgassen zugeordneten Schiebemuffen kann bei einem vorgegebenen Schaltgassenabstand der maximal mögliche Durchmesser der Schiebemuffen und damit der maximal mögliche Durchmesser von zugeordneten Synchronisierungen vergrößert werden. Im Vergleich zu einer herkömmlichen, nicht überlappenden Anordnung der Schiebemuffen ist eine Durchmesservergrößerung von 10 bis 15 % erreichbar. Ein größerer Durchmesser der Synchronisierungen hat den Vorteil, dass größere "Synchronisierungsleistungen" übertragbar sind, was ein schnelleres Schalten ermöglicht.

Im folgenden wird die Erfindung anhand von Ausführungsbeispielen im Zusammenhang mit der Zeichnung näher erläutert. Es zeigen:
- Figur 1: die Anordnung von Schiebemuffen einer Getriebeschaltvorrichtung nach dem Stand der Technik;
- Figuren 2a, b: ein erstes Ausführungsbeispiel gemäß der Erfindung;
- Figuren 3a, b: ein zweites Ausführungsbeispiel gemäß der Erfindung; und
- Figur 4: ein Ausführungsbeispiel entsprechend den Figuren 2a, b, wobei hier zusätzlich Schaltgabeln dargestellt sind.

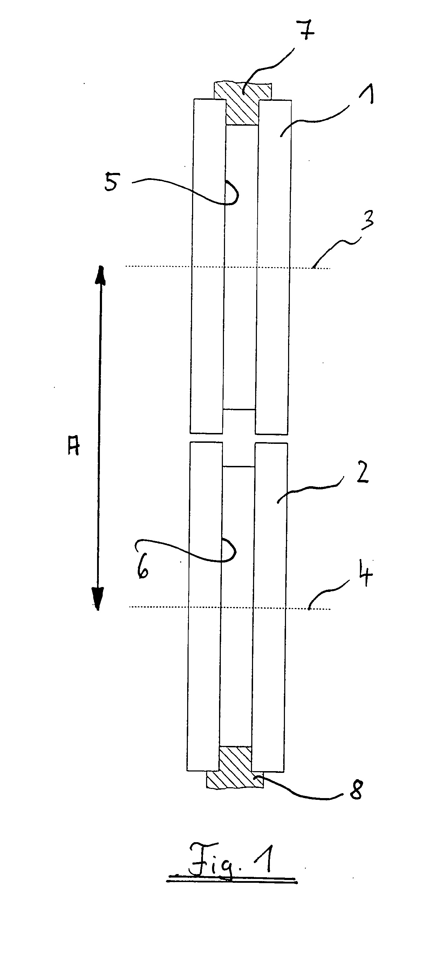

**Figur 1** zeigt eine erste Schiebemuffe 1 und eine zweite Schiebemuffe 2, die jeweils einer durch gepunktete Linien angedeuteten "Schaltgasse" zugeordnet sind. Die Schiebemuffen 1, 2 sind entlang der jeweiligen Schaltgassenlängsrichtung 3, 4 axial verschieblich. Zum Verschieben der Schiebemuffen 1, 2 sind an ihrem Außenumfang umlaufende nutartige Vertiefungen 5, 6 vorgesehen, in die zugeordnete Schaltgabeln 7, 8 eingreifen, die beispielsweise mittels einer Schaltstange betätigbar sind. Alternativ zu einer Schaltgabel kann auch eine Schaltschwinge vorgesehen sein.

Bei der in **Figur 1** gezeigten Getriebeschaltvorrichtung ist der Abstand A der beiden Schaltgassen durch die Durchmesser der Schaltmuffen 1, 2 begrenzt, bzw. bei vorgegebenem Schaltgassenabstand A sind die Durchmesser der Schaltmuffen 1, 2 begrenzt, da zwischen ihren Außenumfängen zumindest ein kleiner Anstand vorgesehen sein muss.

**Figur 2a** zeigt ein Ausführungsbeispiel, bei dem mittig am Außenumfang der Schiebemuffe 1 eine umlaufende ringartige Erhebung 9 vorgesehen ist. Die Schiebemuffe 2 weist ähnlich wie in **Figur 1** eine umlaufende nutartige Vertiefung 6 auf. Die Schaltmuffen 1, 2 sind hier so dimensioniert und angeordnet, dass die ringartige Erhebung 9 der Schiebemuffe 1 in die nutartige Vertiefung 6 der Schiebemuffe 2 "eingreift". Die axialen Projektionen der Schiebemuffen 1, 2 überlappen sich also.

Im Unterschied zu dem in Figur 1 dargestellten Stand der Technik kann bei vorgegebenem Schaltgassenabstand A der maximale Außendurchmesser der Schiebemuffe 1 und damit der maximal mögliche Durchmesser eines der Schiebemuffe 1 zugeordneten Synchronrings größer ausgeführt werden.

Die Breite B der nutartigen Vertiefung 6 der Schiebemuffe 2 ist hier um ein mehrfaches größer als die Breite b der ringartigen Erhebung 9 der Schiebemuffe 1. Dies ermöglicht eine axiale Relativverschiebung der Schiebemuffe 1 gegenüber der Schiebemuffe 2, was in **Figur 2b** dargestellt ist. Die der Schiebemuffe 1 zugeordnete Schaltgasse kann also innerhalb der "Verschiebebreite B" unabhängig vom Schaltzustand der Schiebemuffe 2 geschaltet werden.

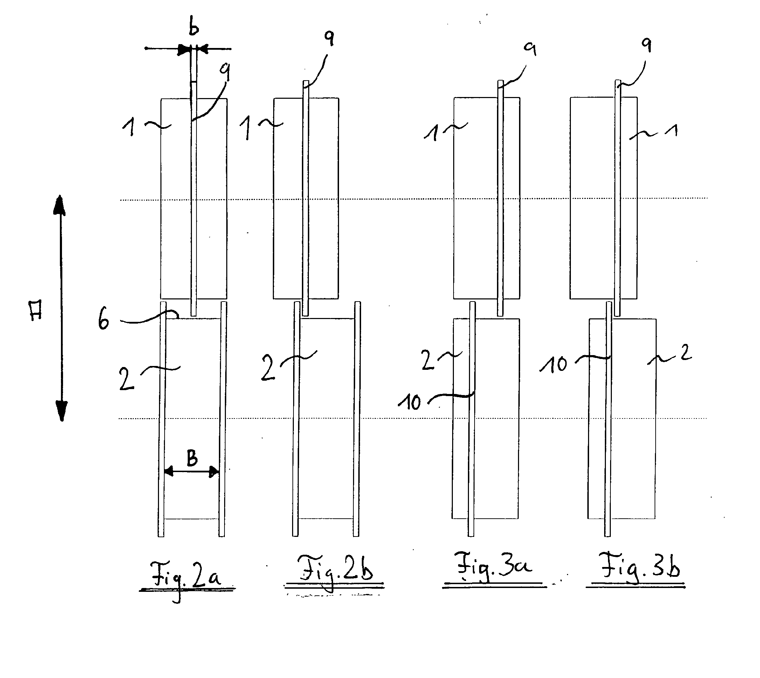

**Die Figuren 3a und 3b** zeigen ein Ausführungsbeispiel, bei denen an beiden Schiebemuffen 1, 2 jeweils eine umlaufende ringartige Erhebung 9, 10 vorgesehen ist. Die ringartige Erhebung 9 der Schiebemuffe 1 ist in Bezug auf die Mittelebene der Schiebemuffe 1 nach "rechts" versetzt, d.h. außermittig angeordnet. Demgegenüber ist die ringartige Erhebung 10 der Schiebemuffe 2 bezüglich der Mittelebene der Schiebemuffe 2 nach "links" versetzt.

Während beim Ausführungsbeispiel der **Figuren 2a, 2b** der maximal mögliche Verschiebeweg in beiden Richtungen begrenzt ist, ist beim Ausführungsbeispiel der **Figuren 3a und 3b** der Verschiebeweg der Schiebemuffe 1 bzw. 2 jeweils nur in einer Richtung durch die jeweils andere Schiebemuffe 1 bzw. 2 begrenzt. Das heißt, die ringartigen Erhebungen 9, 10 der Schiebemuffen 1, 2 bilden jeweils für die andere Schiebemuffe einen "Endanschlag". Da jedoch auch hier die Schiebemuffen 1, 2 mit ihren ringartigen Erhebungen 9, 10 "ineinander eingreifen", d.h. überlappen, können im Vergleich zum Stand der Technik größere Schiebemuffendurchmesser bzw. größere Synchronringdurchmesser realisiert werden.

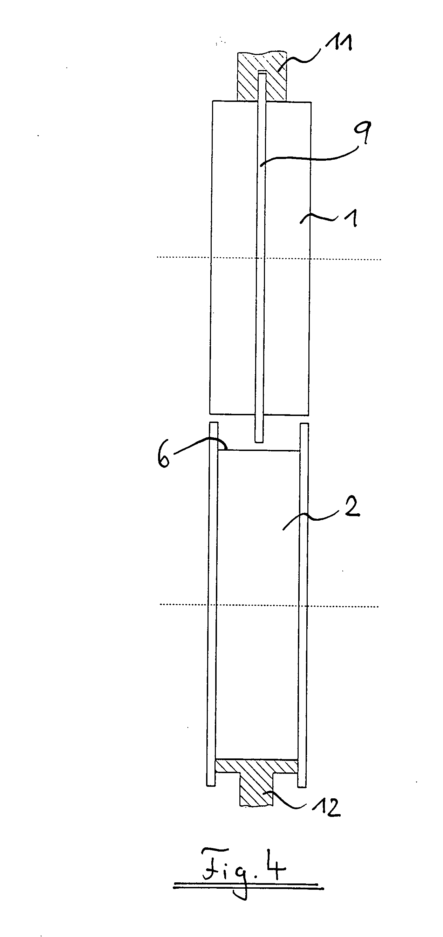

**Figur 4** zeigt ein Ausführungsbeispiel entsprechend den **Figuren 2a, 2b.** Hier sind jedoch zusätzlich "Verschiebeelemente" zum Verschieben der Schiebemuffen 1, 2 dargestellt. Das Verschiebeelement für die Schiebemuffe 1 ist eine klammerartige, geschlitzte Schaltgabel 11, welche die ringartige Erhebung 9 übergreift. Das Verschiebelement der Schiebemuffe 2 hingegen ist eine herkömmliche Schaltgabel bzw. eine herkömmliche Schaltschwinge 12, welche in die nutartige Vertiefung 6 eingreift. Die klammerartige Schaltgabel 11 und die Schaltgabel 12 können in herkömmlicher Weise mit einer Schaltstange verbunden sein.

## Patentansprüche

1. Getriebeschaltvorrichtung mit zwei nebeneinanderliegenden Schaltgassen, denen jeweils eine in Schaltgassenlängsrichtung verschiebbare Schiebemuffe zugeordnet ist, **dadurch gekennzeichnet, dass** die Schiebemuffen (1, 2) so angeordnet sind, dass sich ihre in Schaltgassenlängsrichtung projizierten Außenumfänge überlappen.

2. Getriebeschaltvorrichtung nach Anspruch 1, **dadurch gekennzeichnet, dass** im Umfangsbereich der einen Schiebemuffe (2) eine Ausnehmung (6) vorgesehen ist, in die zumindest ein Teil (9) des Umfangsbereichs der anderen Schiebemuffe (1) eingreifen kann.

3. Getriebeschaltvorrichtung nach Anspruch 1, **dadurch gekennzeichnet, dass** die Ausnehmung (6) eine umlaufende nutartige Vertiefung ist und der darin eingreifende Teil (9) des Umfangsbereichs der anderen Schiebemuffe (1) eine umlaufende ringartige Erhebung (9) ist.

4. Getriebeschaltvorrichtung nach Anspruch 3, **dadurch gekennzeichnet, dass** die axiale Breite (B) der nutartigen Vertiefung (6) um ein mehrfaches größer ist als die axiale Breite (b) der ringartigen Erhebung (9).

5. Getriebeschaltvorrichtung nach Anspruch 3 oder 4, **dadurch gekennzeichnet, dass** die Breite (B) der nutartigen Vertiefung (6) der einen Schiebemuffe (2) um mindestens den Schaltweg der anderen Schiebemuffe (1) größer ist als die Breite (b) der ringartigen Erhebung (9).

6. Getriebeschaltvorrichtung nach einem der Ansprüche 1 oder 2, **dadurch gekennzeichnet, dass** beide Schiebemuffen (1, 2) an ihrem Außenumfang jeweils eine umlaufende ringartige Erhebung (9), 10) aufweisen.

7. Getriebeschaltvorrichtung nach Anspruch 6, **dadurch gekennzeichnet, dass** zumindest eine der ringartigen Erhebungen (9, 10) bezüglich der Mittelebene der zugeordneten Schiebemuffe (1, 2) versetzt angeordnet ist.

8. Getriebeschaltvorrichtung nach Anspruch 7, **dadurch gekennzeichnet, dass** die ringartige Erhebung (9) der einen Schiebemuffe (1) bezüglich einer Axialrichtung (3, 4) nahe dem vorderen Ende der einen Schiebemuffe (1) angeordnet ist und die ringartige Erhebung (10) der anderen Schiebemuffe (2) bezüglich der Axialrichtung (3, 4) nahe dem hinteren Ende der anderen Schiebemuffe (2) angeordnet ist.
